(19) Europäisches Patentamt / European Patent Office / Office européen des brevets

(11) **EP 2 486 232 B1**

(12) **EUROPEAN PATENT SPECIFICATION**

(45) Date of publication and mention of the grant of the patent:
**27.12.2017 Bulletin 2017/52**

(21) Application number: **10768115.7**

(22) Date of filing: **04.10.2010**

(51) Int Cl.:
*E21B 47/04* (2012.01)     *G01F 23/284* (2006.01)

(86) International application number:
**PCT/US2010/051283**

(87) International publication number:
**WO 2011/044023 (14.04.2011 Gazette 2011/15)**

(54) **SYSTEM AND METHOD FOR SENSING A LIQUID LEVEL**

SYSTEM UND VERFAHREN ZUR ERFASSUNG EINES FLÜSSIGKEITSPEGELS

SYSTÈME ET PROCÉDÉ PERMETTANT DE DÉTECTER UN NIVEAU DE LIQUIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.10.2009 US 573434**

(43) Date of publication of application:
**15.08.2012 Bulletin 2012/33**

(73) Proprietor: **Chevron U.S.A. Inc.**
**San Ramon, CA 94583 (US)**

(72) Inventors:
- **THOMPSON, M. Clark**
  **Los Alamos**
  **New Mexico 87544 (US)**
- **WEBB, Charles H.**
  **Bakersfield**
  **California 93312 (US)**
- **RUBBO, Richard P.**
  **The Woodlands**
  **Texas 77381 (US)**
- **ANDERSON, II, David King**
  **The Woodlands**
  **Texas 77380 (US)**
- **YAMASAKI, Mark H.**
  **Houston**
  **Texas 77070 (US)**
- **SMITHSON, Mitchell Carl**
  **Pasadena**
  **Texas 77505 (US)**
- **GONZALEZ, Manuel E.**
  **Kingwood**
  **Texas 77345 (US)**

(74) Representative: **Nash, David Allan**
**Haseltine Lake LLP**
**Redcliff Quay**
**120 Redcliff Street**
**Bristol BS1 6HU (GB)**

(56) References cited:
**US-A- 4 621 264       US-A- 4 793 178**
**US-A1- 2002 053 239   US-A1- 2004 046 571**
**US-B1- 6 237 410      US-B1- 6 480 000**
**US-B1- 6 525 540**

**Description**

BACKGROUND

Field

The present invention relates generally to remote sensing and more particularly to sensing a liquid level at a remote location in a borehole.

Background

In resource recovery, it may be useful to monitor various conditions at locations remote from an observer. In particular, it may be useful to provide for monitoring liquid levels at or near to the bottom of a borehole that has been drilled either for exploratory or production purposes. Because such boreholes may extend several miles, it is not always practical to provide wired communications systems for such monitoring.

US-6,480,000-B discloses a device for measuring and surveillance of resistivity in a petroleum reservoir in a geological formation with an injection-, observation- or production well comprising an electrically conductive metallic well tubing, with the new and inventive being characterized by the following features: a) an electrical energy source; b) at least one inductive transmitter antenna for electromagnetic waves, fixedly arranged in the well, outside of the well tubing's outer metallic surface; c) at least one series of sensors comprising n inductive resistivity sensors (5a, 5b, ... , 5n) arranged for receiving the electromagnetic waves and generation of measurement signals, fixedly arranged in the well, by the petroleum reservoir and outside the well tubing's outer metallic surface; and d) a signal conductor for the measurement signals.

SUMMARY

Disclosed herein is an apparatus for measuring a fluid level in a casing-lined wellbore, including a pulse generator, positionable and operable to generate a pulse of electromagnetic energy to propagate along the wellbore towards a surface of the fluid, a detector, positionable and operable to detect a portion of the electromagnetic pulse reflected from the surface of the fluid and propagated along the wellbore towards the detector, a processor, configured and arranged to receive signals from the detector representative of the detected portion of the electromagnetic pulse and to analyze them to determine a level of the surface of the fluid, and a pump controller, configured and arranged to receive distance information from the processor and to use the distance information to control the operation of a pump located in the wellbore.

Also disclosed herein is an apparatus for measuring a fluid level in a casing-lined wellbore, including a pulse generator, positionable and operable to generate a pulse of electromagnetic energy to propagate along the wellbore towards a surface of the fluid, a detector, positionable and operable to detect a portion of the electromagnetic pulse reflected from the surface of the fluid and propagated along the wellbore towards the detector, a processor, configured and arranged to receive signals from the detector representative of the detected portion of the electromagnetic pulse and to analyze them to determine a level of the surface of the fluid.

A first aspect of the present invention includes a system for measuring a fluid level at a remote location in a wellbore that includes a pulse generator, positionable and operable to generate a pulse of electromagnetic energy to propagate along the wellbore towards a surface of the fluid at a remote location in the wellbore, a detector, positionable remotely from the surface of the fluid in the wellbore and operable to detect a portion of the electromagnetic pulse reflected from the surface of the fluid and propagated along the wellbore towards the detector and received at a surface above the wellbore and a processor, configured and arranged to receive a signal from the detector representative of the detected portion of the electromagnetic pulse and to analyze it to determine a level of the surface of the fluid, based on a measure of the time delay between electromagnetic pulse generation and detection of the detected portion of the electromagnetic pulse reflected from the surface of the fluid.

According to the first aspect of the present invention, the system may be further adapted for measuring two unmixed fluid levels in a wellbore containing a first wellbore fluid and a second wellbore fluid, the second wellbore fluid having a lower density than that of the first fluid and a dielectric constant that is both known and substantially lower than that of the first fluid, wherein the detector is positionable and operable to detect respective portions of the electromagnetic pulse reflected from the surfaces of the fluids and propagated along the wellbore towards the detector, and wherein the processor is configured and arranged to receive a signal from the detector representative of the detected portions of the electromagnetic pulse and to analyze it to determine a level of the surface of each of the two fluids.

According to the first aspect of the present invention, the pulse generator may be a frequency generator, positionable and operable to produce at least two electromagnetic frequency signals to propagate along the wellbore towards a surface of the fluid, the detector may be positionable and operable to detect a portion of the electromagnetic signals reflected from the surface of the fluid and propagated along the wellbore towards the detector, and the processor may be configured and arranged to receive the signals from the detector representative of the detected portions of the electromagnetic signals and to analyze them to determine a level of the surface of the fluid.

According to the second aspect of the present invention, the method may be adapted for controlling a pump located in a wellbore which is a casing-lined wellbore further comprising controlling the operation of the pump, based on the determined surface level of the fluid.

A second aspect of the present invention is a method for measuring a fluid level at a remote location in a wellbore that includes generating a pulse of electromagnetic energy to propagate along the wellbore towards a surface of the fluid at a remote location in the wellbore, detecting a portion of the electromagnetic pulse reflected from the surface of the fluid and propagated along the wellbore towards the detector, wherein the detected portion of the electromagnetic pulse reflected from the surface of the fluid is received at a surface of the wellbore, receiving a signal from the detector representative of the detected portion of the electromagnetic pulse, and analyzing the signal to determine a level of the surface of the fluid, based on a measure of the time delay between electromagnetic pulse generation and detection of the detected portion of the electromagnetic pulse reflected from the surface of the fluid.

According to the second aspect of the present invention, the method may be further adapted for measuring two unmixed fluid levels in the wellbore containing a first wellbore fluid and a second wellbore fluid, the second wellbore fluid having and a lower density than that of the first fluid and a dielectric constant that is both known and substantially lower than that of the first fluid, wherein the pulse of electromagnetic energy is generated to propagate along the wellbore towards a surface of the fluids, respective portions of the electromagnetic pulse reflected from the surfaces of the fluids and propagated along the wellbore towards the detector are detected, and the signal from the detector representative of the detected portions of the electromagnetic pulse it is analyzed to determine a level of the surface of each of the two fluids.

According to the second aspect of the present invention the at least two electromagnetic signals having respective different frequencies may be generated to propagate along the wellbore towards a surface of the fluid, respective portions of the electromagnetic signals reflected from the surface of the fluid and propagated along the wellbore towards the detector may be detected, and signals received from the detector representative of the detected portions of the electromagnetic signals and may be analyzed to determine the level of the surface of the fluid.

Aspects of embodiments of the present invention include computer readable media encoded with computer executable instructions for performing any of the foregoing methods and/or for controlling any of the foregoing systems.

DESCRIPTION OF THE DRAWINGS

Other features described herein will be more readily apparent to those skilled in the art when reading the following detailed description in connection with the accompanying drawings, wherein:

Figure 1 is a schematic illustration of a system for remotely measuring a fluid level in a borehole in accordance with an embodiment of the present invention;

Figure 2 is a trace illustrating a return signal reflected from a location in a simulated borehole;

Figure 3 is a flowchart illustrating a method in accordance with an embodiment of the present invention;

Figure 4 is a schematic illustration of a system for remotely measuring a fluid level in a borehole incorporating calibration markers in accordance with an embodiment of the present invention;

Figure 5a is a transverse cross sectional schematic illustration of a transmission line for use in an embodiment of the present invention; and

Figure 5b is a longitudinal cross sectional schematic illustration of a transmission line for use in an embodiment of the present invention.

DETAILED DESCRIPTION

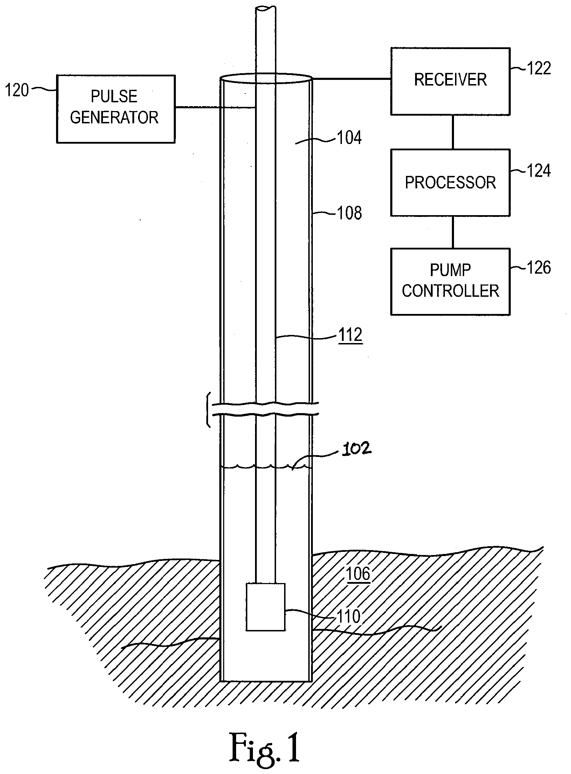

Figure 1 illustrates an example of an apparatus 100 for sensing a surface level of a fluid 102 in a borehole 104. In the illustrated example, the borehole 104 extends through a hydrocarbon producing formation 106. Though the borehole 104 is illustrated as a straight, vertical bore, in practice the borehole will have a more complex geometry and can have any orientation, including varying orientation along its length.

The borehole is lined with a hollow casing 108 made up of a number of segments of generally conductive material. The hollow borehole casing 108 can, for example, be configured of steel or other suitable material. In a typical drilling application, the borehole casing 108 may be a standard casing used to provide structural support to the borehole in ordinary drilling and production applications and it is not necessary to provide any additional outer conductive medium.

Hydrocarbon production is facilitated when pressure in the producing formation 106 is greater than pressure within the borehole 104. In this regard, the level of the fluid 102 is important, as any accumulated fluid 102 within the borehole 104 that is at or above the level of the producing formation 106 will exert a pressure in opposition to the pressure of the producing formation 106.

It is useful to provide a downhole pump 110 that can produce artificial lift to facilitate production of oil or gas from the producing formation 106. The liquids from the formation are typically pumped to the surface via tubing 112, while gas rises to the surface by way of the annular area between the tubing 112 and the casing 108. It is generally wearing on such pumps for them to run dry should the fluid level in the borehole drop below an operating position of the pump 110. Thus, there is a balance to be struck between minimizing the fluid level to reduce counterproductive pressure in the borehole 104 and ensuring that pumps present in the borehole 104 are not allowed to run dry.

Examples of the types of downhole pumps that are used in this application include electrical submersible pumps, progressing cavity pumps, sucker-rod pumps and others.

In order to facilitate pump control such that fluid levels are kept low, but high enough to avoid running the pump dry, it is useful to provide for measurement of the fluid level. In embodiments, such measurement may be performed continuously and in real time. The fluid level measurement may usefully accommodate potentially confounding factors such as joints in the borehole casing or foaming near the fluid surface, which can produce incorrect measurements.

The apparatus 100 for measuring the fluid level includes a pulse generator 120. The pulse generator 120 is configured to produce an electromagnetic pulse, which will be transmitted along the length of the borehole, with the casing acting as a waveguide. In this case, the tubing 112 acts as a central conductor and the casing/tubing system together essentially form a coaxial cable.

The pulse generator 120 may be coupled into the borehole by a direct attachment or may be otherwise electromagnetically coupled to the borehole.

The pulse generator 120 may be any device including, but not limited to, an electronic structure for receiving electromagnetic energy and generating a signal therefrom. Examples of suitable pulse generators include spark gap generators, a network analyzer such as a Bode box or other devices that, for example, make use of fast switching components such as avalanche transistors or fast silicon controlled rectifiers (SCRs). Useful devices include those that are capable of producing 10-100A with a voltage that can be varied by 30V/ns or more. In general, radio frequency electromagnetic pulses are well-suited to this application, in particular in a range from about 3MHz to 100MHz. The frequency can be selected as a function of the material characteristics of the conductive pipe (e.g., steel). Skin depth can limit use of high frequencies above a certain point, and a lower end of the available frequency range can be selected as a function of the simplification of the construction of the pulse generator.

As the pulse propagates along the borehole, changes in impedance result in partial reflections of the energy of the pulse, which reflections may be received at the surface with a receiver or detector 122 module of the apparatus 100. Such impedance changes may result from joints in the casing, the presence of objects in the borehole, or the like. In the case of a fluid with a relatively low dielectric constant such as crude oil, a partial reflection of the remaining energy in the electromagnetic pulse occurs at the fluid interface. In the case of a fluid with a relatively high dielectric constant, such as a mixture containing significant portions of water, a near total reflection of the remaining energy in the electromagnetic pulse occurs as the fluid acts to short circuit the borehole.

A processor 124 is used to analyze the received signals to determine the fluid level. Furthermore, the processor 124 may be used to operate a pump controller 126 to change an operation state of the pump 110, based on the measured fluid level. The pump controller may be linked directly (not shown) or wirelessly to the pump 110. In particular, the pump controller 126 may reduce pumping capacity by adjusting pump operation speed or stroke if the fluid level is near (within a few feet or a few tens of feet) the pump level, or it may stop the pump completely if the pump level is above the fluid level. Similarly, if the fluid level in the wellbore rises higher than is necessary to keep the pump from running dry, the controller may increase pump capacity. The amount higher than pump level at which pump capacity should be increased may be selected, either by a user or it may be predetermined and programmed into the controller.

Successive measurements may be used to determine a magnitude and direction of change of the fluid level. In this embodiment, either or both of the magnitude and direction may be used to control the pump capacity. Thus, if the fluid level is changing rapidly, the pump capacity may be changed rapidly as well. Likewise, if the fluid level is near the pump level, but is increasing, the controller may reduce pump capacity by only a small amount in order to maintain the fluid level rather than reducing by a large amount which may tend to increase the fluid level undesirably.

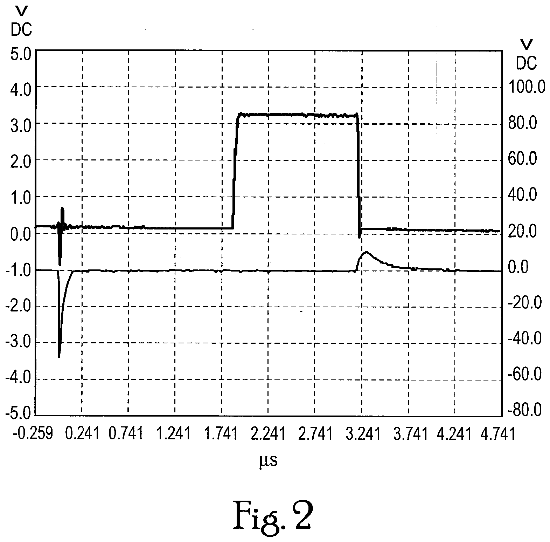

FIG. 2 is a trace of a return signal from a simulated 1600 foot well received by the receiver 122. Based on a measure of the time delay between launching the pulse and receiving the return signal, a distance along the borehole can be calculated using the processor 124:

$$d = t \cdot c \qquad \qquad \text{Eqn. 1}$$

where d is the total distance to the fluid and back again to the detector at the surface, i.e., double the distance between the surface and the fluid, $t$ is the delay time and $c$ is the speed of propagation of the electromagnetic energy in air.

The top line of FIG. 2 represents detector on-time. When the voltage is high (about 3V), the detector is on. As illustrated, this corresponds to times between about 1.741$\mu$s and about 3.241$\mu$s. In this example, once a signal is detected, the detector is powered off, though this is not a requirement. The lower line in FIG. 2 represents the detected signal. As may be seen, an impulse was recorded at about 3.241$\mu$s. As described above, this time represents twice the time the signal takes to propagate along the well in one direction. Therefore, the distance from the surface to the fluid is, as expected, about 1600 ft (where one foot is approximately equivalent to a 1ns delay).

In an embodiment, a threshold may be set, such that returns below the threshold which are more likely to represent casing joints, for example, are ignored. In one approach, a user may set a delay such that no returns received prior to the end of the delay time are allowed to trigger the apparatus, thereby reducing false readings. In FIG. 2, this corresponds to the interval between zero and 1.741$\mu$s. A longer delay would result in a more narrow measurement window such that the top line of FIG. 2 would show a narrower square wave shape, corresponding to a single grid box width, for example. In this approach, the user may base the delay on known information relating to a general location of the fluid level, such as may be obtained from acoustic or gravimetric techniques.

The system as described may be used to obtain measurements with accuracy on the order of one foot or so (i.e., one nanosecond in the time domain). In general, measurements accurate to within about 10 feet are sufficient to allow reasonable pump control.

In another embodiment, the pulse generator 120 may be configured to generate electromagnetic frequency signals, or tones, and the processor 124 configured to analyze the reflections in the frequency domain. In this embodiment, a first frequency signal is injected and a first reflected signal phase is measured. A second frequency signal is injected and a second reflected signal phase is measured. The first reflected phase is compared to the second reflected phase to calculate the distance between the tone generator to the surface of the fluid. This can be accomplished using Eqn. 2 below.

$$l = -\frac{c_0}{\sqrt{\varepsilon_r} \cdot 2\pi} \cdot \frac{\delta\phi}{\delta f} \cdot \frac{1}{2} \qquad \qquad \text{Eqn. 2}$$

Where:

$l$ = length to the fluid surface (m)
$c_0$ = the speed of EM propagation in free space (m/s)
$\varepsilon_r$ = the relative dielectric constant of the insulating material of the transmission line. (In this case air or methane)
$\delta\varphi$ = the change in phase (radians)
$\delta f$ = the change in frequency (Hz)
$2\pi$ = constant used to equate frequency to radians
$\frac{1}{2}$ = constant used to adjust for the fact that both the original and reflected signal must each travel the full length in succession.

Negative sign is used based on the convention that the second frequency chosen is higher than the first frequency chosen

Eqn. 2 above applies when the wavelength of the highest frequency signal injected is greater than or equal to 2$l$. In this embodiment, the frequency of the highest frequency injected signal should be:

$$f_s = c_0 \, / \, [(\,\varepsilon r\,)^{(1/2)} \bullet 2l] \qquad \qquad \text{Eqn. 3}$$

In another embodiment, injected signals with frequencies higher than $f_s$ as determined in Eqn. 3 above may be used. In this embodiment the difference in signal frequency between the first and second selected injected signals is less than $f_s$, and the wave length of the first and second selected frequencies signals are within the same whole multiple of 2$l$. Analyzing the phase response of a swept frequency input is useful in selecting valid frequency signal pairs to be used.

In one embodiment, a vector network analyzer is used to generate the frequency signals, or tones, and to receive and analyze the reflected frequency signals.

In another embodiment, the injected signal is tuned to a frequency in which the reflected signal is fully in phase or 180 deg out of phase with respect to the injected frequency signal. The peak amplitude of the resultant total transmission line signal is used to identify phase alignment. The peak level is maximized when the reflected signal is in phase and is minimized when the reflected signal is out of phase.

In this embodiment, the first reflected frequency signal is phase aligned to the first generated frequency signal. The second generated frequency is tuned to the next higher or lower available frequency to that produces a second reflected signal with the same phase relationship as was achieved with the first frequency.

In this embodiment, the phase difference between the first and second frequencies is $\delta\varphi = 2\pi$ radians. Equation 2 above is applied to determine the distance to the fluid surface.

Because the conductivity of hydrocarbons differs significantly from that of water, signal strength may be used to allow for determining not just the presence of fluid, but the type. In experimental trials, the amplitude difference in signal between a return from an oil surface and that from a water surface is about 1:1.3. In the case of a mixed oil/water fluid, the oil/water ratio of the mixture is be determined by interpolation of the amplitude of the mixture's reflected signal to that which would be expected at the same depth from both 100% water and 100% oil.

In the case of unmixed fluids, wherein the lower density fluid has a dielectric constant that is significantly lower than that of the higher density fluid, such as is the case with oil with respect to water, return signals are obtained from both fluid interfaces.

When the imposed signal reaches the gas to oil interface, a portion of the signal is reflected back, but much of the signal will continue to propagate to the oil/water interface where the remaining portion of the transmitted signal is reflected back. In such unmixed oil-on-top-of-water scenario, the time between the receipt of the two reflected pulses can be converted into a height of oil based upon the expected rate of signal propagation in the interval occupied by the oil. Establishing the height of standing oil and water columns in the well bore at different time intervals provides comparative measurements for determining the formation oil/water ratio and with other well analysis methods based upon reservoir pressure and production rate correlations.

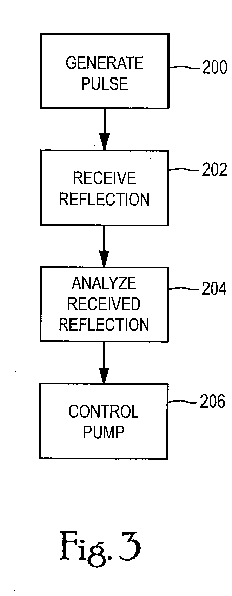

FIG. 3 is a flowchart illustrating a method of operation in accordance with an embodiment of the invention. The pulse generator 120 is used to generate (200) a pulse that propagates along the borehole in a downhole direction. The receiver 122 receives(202), a return signal reflected from the surface of the fluid that is propagated back up the wellbore. The processor 124 then analyzes (204) the received signal to determine a distance to the fluid surface. Based on the determined distance, the pump controller 126 operates to control (206) the operation of the pump 110 as discussed above.

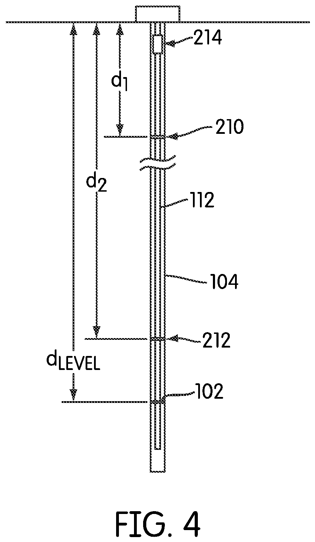

In an embodiment, impedance changes are introduced purposely into the transmission line. In a particular approach, a marker 210 is placed at a known depth ($d_1$) in the borehole 104, as illustrated in Figure 4. A second marker 212 is placed at a second known depth ($d_2$) in the borehole 104. In operation, as a pulse propagates along the borehole, each of the two markers will produce a partial reflection of the propagating pulse in addition to the reflection at the fluid interface. Markers may be any structure that alters the impedance of the transmission line. For example, a coaxial choke 214, a wiper arm with a controlled resistance or a conductive annular structure that locally reduces the dielectric distance between the casing and the tubing could act as markers. As noted above, such impedance changes may also exist at casing joints, depths of which may be calculated when the casing is assembled from sections having standard or otherwise known lengths. Markers' structure and composition should be selected to produce a relatively small return, so that a majority of the energy will continue to propagate, maintaining sufficient strength to provide a reflection at the fluid interface.

In this embodiment, it is possible to account for unknown qualities of or changes in dielectric constant of the medium through which the electromagnetic pulse is traveling. In particular, the distance to the surface may be calculated in accordance with Eqn. 4:

$$d = d_2 + (d_2 - d_1)/(t_2 - t_1) \times (t - t_2) \qquad \text{Eqn. 4}$$

where $d_1$ is the distance to the first marker, $t_1$ is the time of arrival of the first reflected signal, $d_2$ is the distance to the second marker, $t_2$ is the time of arrival of the second signal, d is the distance to the reflective surface, and t is the time of arrival of the third signal.

As will be appreciated, the division operation determines an average propagation velocity over the interval between the first and second markers. That velocity is multiplied by the time interval between the second marker and the fluid interface to determine a distance between the second marker and the fluid interface. That is, the formula assumes that velocity of propagation between the first and second markers is the same as the velocity between the second marker and the fluid interface. In this regard, the use of additional markers at additional known depths may allow for additional statistics to be generated to determine whether velocity of propagation is substantially constant along various intervals in the borehole or whether a more complex expression of velocity should be used.

In another embodiment, a single marker could be used The lead-in coaxial cable rarely has the same impedance of the wellbore structure. Therefore, the impedance mismatch at the connection between the two serves as the first marker. In this case, $d_1$ is the distance of the connection below the wellhead and $t_1$ is the reflection time along the lead-in cable. Commercial coaxial cable has significantly different wave propagation velocity than that of the wellbore structure, so this is particularly useful. Further, some wellbore structures have reduced casing diameters at a known distance. The change in the tubular diameter causes an impedance change and a partial reflection of the pulse. Thus, in some wells, the marker element is created by the wellbore structure.

In a particular embodiment, the velocity calibration is performed periodically and statistics are recorded. Where the recorded statistics provide a pattern of change, that pattern may be used as an input to the depth calculation. Likewise, the recorded statistics may be used to calculate a degree of uncertainty of the measurement system. Alternately, or in conjunction with the foregoing approaches, drifting calibration velocities may be taken as an indicator of systematic changes in the medium within the borehole. For example, changes in dielectric constant may indicate changes in temperature or humidity in air within the borehole. In an embodiment for use in a stem injection well, humidity measurements could provide information relating to the steam quality (i.e., the amount of water present in liquid phase versus gaseous phase in the steam).

As noted above, an oil/air interface would be expected to provide a relatively low signal strength due to the relatively small impedance (i.e., dielectric constant) mismatch between air and oil as compared with air and water. Therefore, in an embodiment, a material that will increase the reflectivity of the interface is introduced at the fluid interface.

The reflectivity-increasing material typically has a density selected to ensure that it will float on top of the fluid surface. In this regard, the density should have a density not only less than water, but less than that of oil that may be floating on top of the water. For example, a specific gravity of less than about 0.7 (dimensionless) should ensure that the material will float irrespective of whether oil is present in the fluid. The material may, in some embodiments, be floated in a relatively thin layer at the surface of the fluid.

Furthermore, useful materials for this application should not be miscible in either water or oil, thereby ensuring that the material remains floating rather than becoming mixed into the fluid. Finally, in order to produce the desired increase in reflectivity, the material should be conductive, have a dielectric constant somewhat higher than that of crude oil, and/or have ferrous properties. By way of example, a value of 5 (about double that of oil at 2-3) may be sufficient to provide this functionality.

In this regard, a number of materials having the above properties are proposed. First, low density solids (i.e., where low density in this case means a specific gravity of less than 0.7) such as polymers or hollow glass beads may be used. Polymers may be in pellet or flake form, or in a hollow bead form. In either case, the beads may be entirely hollow, or may encapsulate another material to achieve the desired dielectric properties. By way of example, hollow glass microspheres having a nickel coating (coated by, e.g., vapor deposition) would be suitable.

The material may alternately be a low density liquid such as methanol. Though methanol is miscible in water, for the case where there is a known oil surface at the interface, the oil layer can act to maintain separation between the water and the methanol. Alternately, a colloidal suspension of a material that meets the above requirements could be employed. As an example, a colloidal suspension of iron oxide in a sufficiently low density medium would fit the criteria.

In one embodiment, the material is introduced and remains floating on the surface at the interface. In an alternate embodiment, re-application of the material could be employed. In this regard, the material could be delivered by a feeding system that is positionable within the borehole and/or at a location that allows injection into the borehole.

The above system is generally described as using the well casing and drill string as a transmission line for the signal to be reflected. In an alternate approach, the signal is transmitted using spoolable conductor placed in the borehole for this purpose. Such an arrangement may find applicability, for example, in an uncased borehole, or in a borehole in which there are breaks in the conductivity of the casing or in which the drill string and casing are in intermediate or constant contact, introducing a short.

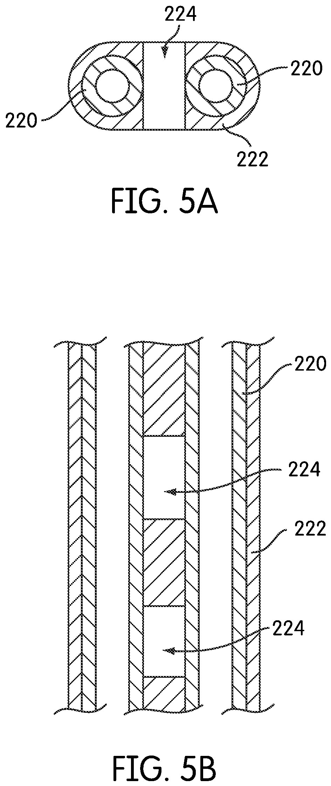

In some circumstances, umbilicals are deployed within the borehole for a variety of purposes. In one example, insertable dewatering systems include metal tubing that is used to provide flow paths for fluid being removed from the borehole. As shown in Figures 5a and 5b, one such umbilical of this type includes two stainless steel flow paths 220 surrounded by an insulating layer 222.

In order to allow the measurement of the fluid interface, fluid should be allowed to flow between the two conductors freely. As shown in Figures 5a and 5b, selective sections 224 of the insulation are removed at least within a region of interest along the length of the umbilical. That is, there need not be any removed sections over intervals where no measurement will be taken (e.g., an initial length of the umbilical). The removed sections should be positioned and dimensioned to allow fluid to freely flow into the gap between the conductors, and also to allow fluid to freely flow out of the gap when the fluid level drops relative to the transmission line.

Distances between sections and section size will depend in part on the measurement of interest. For example, for a pump control system, a one inch section every 12 inches may be appropriate. In other situations, it may be useful to have sections on approximately one inch intervals.

As will be appreciated, the umbilical that bears the transmission line into the borehole need not be a part of a dewatering system, or any particular component. To the contrary, the principle of the invention is applicable to any spooled system that might be introduced into the wellbore for use in operations, or even to a separate line altogether. In principle, what is required is a pair of conductors. The pair may be provided by using a two conductor line, or a single conductor line that cooperates with the tubing, casing, or drill string to provide the second conductor.

Control lines for use with downhole pressure transducer (DHPT) gauges, chemical injection systems, hydraulic control lines, tubing encased or encapsulated conductor (TEC), instrument wire (i-wire), or the like can be used either to bear a conductor or as the conductor itself. Such control lines, when appropriately insulated, are suitable for use as the conductor in the system described above. In embodiments, the control lines may be positioned outside the tubing, or form a portion of an insert assembly that is installed within the tubing.

Those skilled in the art will appreciate that the disclosed embodiments described herein are by way of example only, and that numerous variations will exist. The invention is limited only by the claims, which encompass the embodiments described herein as well as variants apparent to those skilled in the art. In addition, it should be appreciated that structural features or method steps shown or described in any one embodiment herein can be used in other embodiments as well.

**Claims**

1. A system for measuring a fluid level (102) at a remote location in a wellbore, comprising:

   a pulse generator (120), positionable and operable to generate a pulse of electromagnetic energy to propagate along the wellbore towards a surface of the fluid at a remote location in the wellbore;
   a detector (122), positionable remotely from the surface of the fluid in the wellbore and operable to detect a portion of the electromagnetic pulse reflected from the surface of the fluid and propagated along the wellbore towards the detector (122) and received at a surface above the wellbore; and
   a processor (124), configured and arranged to receive a signal from the detector (122) representative of the detected portion of the electromagnetic pulse and to analyze it to determine a level of the surface of the fluid (102), based on a measure of the time delay between electromagnetic pulse generation and detection of the detected portion of the electromagnetic pulse reflected from the surface of the fluid.

2. A system as in claim 1, further adapted for measuring two unmixed fluid levels in the wellbore containing a first wellbore fluid and a second wellbore fluid, the second wellbore fluid having a lower density than that of the first fluid and a dielectric constant that is both known and substantially lower than that of the first fluid, wherein the detector (122) is positionable and operable to detect respective portions of the electromagnetic pulse reflected from the surfaces of the fluids and propagated along the wellbore towards the detector (122); and wherein the processor (124) is configured and arranged to receive a signal from the detector (122) representative of the detected portions of the electromagnetic pulse and to analyze it to determine a level of the surface of each of the two fluids

3. A system as in claim 1 or 2, further comprising a pump controller (126), configured and arranged to receive distance information from the processor (124) and to use the distance information to control the operation of a pump (110) located in the wellbore.

4. A system as in any of claims 1-3, wherein the processor (124) is further configured and arranged to analyze the signals to obtain information relating to a proportion of water to hydrocarbon in the fluid based on an amplitude of the detected portion.

5. A system as in any of claims 1-4, wherein the pulse propagates along the wellbore via a transmission line comprising a pair of electrical conductors electrically isolated from each other, optionally wherein one of the conductors comprises at least one well component selected from the group consisting of well casing, tubing, a drill string, an umbilical, a control line, a hydraulic line or, a TEC (Tubing Encased Conductor).

6. A system as in claim 5, wherein the transmission line comprises a pair of conductive lines having insulation thereon, the insulation having gaps therein at selected intervals along at least a portion of a length of the transmission line, the gaps being sized and configured to allow fluid to flow therein when positioned below the level of the surface of the fluid (102).

7. A system as in any of claims 1-6, further comprising at least one marker (210) positionable at a known depth wherein, in use, the detector (122) is further positionable and operable to detect a further portion of the electromagnetic pulse reflected from the marker (210) and the processor (124) is further configured and arranged to receive a further signal from the detector (122) representative of the detected further portion of the electromagnetic pulse, and to analyze the received signal and the further received signal in conjunction with each other so as to determine the level of the surface of the fluid (102).

8. A system as in any of claims 1-7, further comprising a source of reflectivity-increasing material configured and arranged to supply a reflectivity increasing material to the surface of the fluid, optionally wherein the reflectivity-increasing material comprises a material having a specific gravity less than about 0.7, that is not miscible in oil, and that reflects a higher proportion of the electromagnetic pulse than would be reflected by oil, for example, a material comprising a plurality of hollow glass microspheres having a nickel coating.

9. A system as in any of claims 1, 3-6 and 8, wherein:

the pulse generator (120) is a frequency generator, positionable and operable to produce at least two electromagnetic frequency signals to propagate along the wellbore towards a surface of the fluid;
the detector (122) is positionable and operable to detect a portion of the electromagnetic signals reflected from the surface of the fluid and propagated along the wellbore towards the detector (122); and
the processor (124) is configured and arranged to receive the signals from the detector (122) representative of the detected portions of the electromagnetic signals and to analyze them to determine a level of the surface of the fluid (102).

10. A system as in claim 9, wherein the detector (122) is configured and arranged to detect phase information of the detected portions of the electromagnetic signals and the processor (124) is configured and arranged to analyze the detected phase information to determine the level of the surface of the fluid (102).

11. A method of measuring a fluid level (102) at a remote location in a wellbore, comprising:

generating a pulse of electromagnetic energy to propagate along the wellbore towards a surface of the fluid at a remote location in the wellbore;
detecting a portion of the electromagnetic pulse reflected from the surface of the fluid and propagated along the wellbore towards the detector (122), wherein the detected portion of the electromagnetic pulse reflected from the surface of the fluid is received at a surface of the wellbore;
receiving a signal from the detector (122) representative of the detected portion of the electromagnetic pulse and analyzing it to determine a level of the surface of the fluid (102), based on a measure of the time delay between electromagnetic pulse generation and detection of the detected portion of the electromagnetic pulse reflected from the surface of the fluid.

12. A method as in claim 11, further adapted for measuring two unmixed fluid levels in the wellbore containing a first wellbore fluid and a second wellbore fluid, the second wellbore fluid having and a lower density than that of the first fluid and a dielectric constant that is both known and substantially lower than that of the first fluid, wherein:

the pulse of electromagnetic energy is generated to propagate along the wellbore towards a surface of the fluids;
respective portions of the electromagnetic pulse reflected from the surfaces of the fluids and propagated along the wellbore towards the detector (122) are detected; and
the signal from the detector (122) representative of the detected portions of the electromagnetic pulse is analyzed to determine a level of the surface of each of the two fluids.

13. A method as in claim 11, wherein:

at least two electromagnetic signals having respective different frequencies are generated to propagate along the wellbore towards a surface of the fluid;
respective portions of the electromagnetic signals reflected from the surface of the fluid and propagated along the wellbore towards the detector (122) are detected; and
signals received from the detector (122) representative of the detected portions of the electromagnetic signals are analyzed to determine the level of the surface of the fluid (102).

14. A method as in any of claims 11-13, further comprising controlling a pump (110) located in the wellbore based on the determined level of the surface of the fluid (102).

15. A method as in any of claims 11-14, wherein the analyzing further comprises analyzing the signals to obtain information relating to a proportion of water to hydrocarbon in the fluid based on an amplitude of the detected portion.

16. A method as in any of claims 11-15, wherein the pulse propagates along the wellbore via a transmission line comprising a pair of electrical conductors electrically isolated from each other, optionally wherein one of the conductors comprises at least one well component selected from the group consisting of well casing, tubing, a drill string, an umbilical, a control line, a hydraulic line or, a TEC (Tubing Encased Conductor).

17. A method as in of claim 16 wherein the transmission line comprises a pair of conductive lines having insulation thereon, the insulation having gaps therein at selected intervals along at least a portion of a length of the transmission line, the gaps being sized and configured to allow fluid to flow therein when positioned below the level of the surface of the fluid (102).

18. A method as in any of claims 11-12 or 14-17, further comprising:

    positioning at least one marker (210) at a known depth and further comprising detecting a a further portion of the electromagnetic pulse reflected from the marker (210); and
    analyzing the received signal and the further received signal in conjunction with each other to determine the level of the surface of the fluid (102).

19. A method as in any of claims 11-17, further comprising supplying a reflectivity increasing material to the surface of the fluid, optionally wherein the reflectivity-increasing material comprises a material having a specific gravity less than about 0.7, that is not miscible in oil, and that reflects a higher proportion of the electromagnetic pulse than would be reflected by oil, for example, a material comprising a plurality of hollow glass microspheres having a nickel coating.

20. A method as in claim 13 or claims 14-17 or 19 as depending from claim 14, wherein the detector (122) is configured and arranged to detect phase information of the detected portions of the electromagnetic signals and the processor (124) is configured and arranged to analyze the detected phase information to determine the level of the surface of the fluid (102).

21. A method as in claim 11, further adapted for measuring the distance between the signal generator and the liquid level in the wellbore, comprising:

    generating a first frequency signal of electromagnetic energy to propagate along the wellbore towards the surface of the fluid;
    detecting a portion of the first frequency signal reflection from the surface of the fluid and propagated along the wellbore towards the detector (122);
    generating a second frequency signal of electromagnetic energy to propagate along the wellbore towards the surface of the fluid;
    detecting a portion of the second frequency signal reflection from the surface of the fluid and propagated along the wellbore towards the detector (122);
    analyzing the first and second generated frequency signals and the first and second frequency signal reflections to determine the level of the surface of the fluid (102).

22. A system as in claim 3, wherein the wellbore is a casing-lined (108) wellbore.

23. A system as in claim 22, wherein: (i) the pump controller (126) reduces pump capacity when the distance information indicates that the fluid level (102) is near a pump level in the wellbore; and/or (ii) the pump controller (126) stops the pump (110) when the distance information indicates that the fluid level (102) is at or below a pump level in the wellbore; and/or (iii) the pump controller (126) increases pump capacity when the distance information indicates that the fluid level (102) is at a level greater than a selected amount greater than the pump level.

24. A system as in any of claims 22-23, wherein the processor (124) is further configured and arranged to analyze the signals to obtain information relating to a composition of the fluid based on an amplitude of the detected portion, optionally wherein composition information comprises a proportion of water to hydrocarbon.

**25.** A system as in any of claims 22-24, wherein a rate of change of successive distance information measurements is used to determine whether the fluid level (102) is rising or falling, and the pump controller (126) further controls the operation of the pump (110) based on (i) the direction of change of the fluid level (102), or (ii) a magnitude of change of the fluid level (102).

**26.** A method as in claim 11, adapted for controlling a pump (110) located in a wellbore which is a casing-lined (108) wellbore, further comprising:

controlling the operation of the pump (110), based on the determined surface level (102) of the fluid.

**27.** A method as in claim 26, wherein: (i) the controlling comprises reducing pump capacity when the determined surface level (102) is near a pump level in the wellbore; and/or (ii) the controlling comprises stopping the pump (110) when the distance information indicates that the fluid level (102) is at or below a pump level in the wellbore; and/or (iii) the controlling comprises increasing pump capacity when the distance information indicates that the fluid level (102) is at a level greater than a selected amount greater than the pump level .

**28.** A method as in any of claims 26-27, further comprising determining information relating to a composition of the fluid based on an amplitude of the detected portion, optionally wherein the composition information comprises a proportion of water to hydrocarbon.

**29.** A method as in any of claims 26-28, wherein the controlling further comprises controlling the operation of the pump (110) based on (i) a direction of change of the fluid level (102) over successive measurements, or (ii) a magnitude of change of the fluid level (102) over successive measurements.

**Patentansprüche**

**1.** System zum Messen eines Flüssigkeitspegels (102) an einem abgelegenen Ort in einem Bohrloch, umfassend

einen Pulsgenerator (120), positionierbar und bedienbar zum Erzeugen eines elektromagnetischen Pulses, so dass der sich entlang des Bohrlochs zu einer Oberfläche der Flüssigkeit an einem abgelegenen Ort im Bohrloch hin ausbreiten kann;
einen Detektor (122), positionierbar entfernt von der Oberfläche der Flüssigkeit im Bohrloch und bedienbar zum Detektieren eines Teils des elektromagnetischen Pulses, der von der Oberfläche der Flüssigkeit reflektiert worden ist und sich entlang des Bohrlochs zum Detektor (122) hin ausgebreitet hat und an einer Oberfläche über dem Bohrloch empfangen worden ist; und
einen Prozessor (124), ausgelegt und angeordnet zum Empfangen eines Signals vom Detektor (122), das den detektierten Teil des elektromagnetischen Pulses darstellt, und um ihn zu analysieren, zum Bestimmen eines Pegels der Oberfläche der Flüssigkeit (102), auf der Basis einer Messung der Zeitverzögerung zwischen Erzeugung des elektromagnetischen Pulses und Detektion des detektierten Teils des elektromagnetischen Pulses, der von der Oberfläche der Flüssigkeit reflektiert worden ist.

**2.** System gemäß Anspruch 1, zudem ausgelegt zum Messen von zwei nicht vermischten Flüssigkeitspegeln im Bohrloch, das eine erste Bohrlochflüssigkeit und eine zweite Bohrlochflüssigkeit enthält, wobei die zweite Bohrlochflüssigkeit eine geringere Dichte als die der ersten Flüssigkeit hat und eine dielektrische Konstante, die sowohl bekannt als auch wesentlich geringer ist als die der ersten Bohrlochflüssigkeit, wobei der Detektor (122) positionierbar und bedienbar ist zum Detektieren entsprechender Teile des elektromagnetischen Pulses, die von den Oberflächen der Flüssigkeiten reflektiert worden sind und sich entlang des Bohrlochs zum Detektor (122) ausgebreitet haben; und wobei der Prozessor (124) ausgelegt und angeordnet ist zum Empfangen eines Signals von Detektor (122), das die detektierten Teile des elektromagnetischen Pulses darstellt und um ihn zu analysieren zum Bestimmen eines Pegels der Oberfläche jeder der beiden Flüssigkeiten.

**3.** System gemäß Anspruch 1 oder 2, zudem umfassend eine Pumpensteuerung (126), ausgelegt und angeordnet zum Empfangen von Entfernungsinformation vom Prozessor (124) und zum Verwenden der Entfernungsinformation zum Steuern des Betriebs einer Pumpe (110), die sich im Bohrloch befindet.

**4.** System gemäß irgendeinem der Ansprüche 1 bis 3, wobei der Prozessor (124) zudem ausgelegt und angeordnet ist zum Analysieren der Signale zum Erhalten von Informationen betreffend einen Anteil von Wasser zu Kohlenwasserstoff in der Flüssigkeit auf der Grundlage einer Amplitude des detektierten Teils.

5. System gemäß irgendeinem der Ansprüche 1 bis 4, wobei der Puls sich entlang des Bohrlochs über eine Übertragungsleitung ausbreitet, umfassend ein Paar elektrische Leiter, die elektrisch voneinander isoliert sind, wahlweise wobei einer der Leiter mindestens eine Bohrlochkomponente umfasst, ausgewählt aus der Gruppe Bohrlochschalung, -rohrmaterial, einem Bohrstrang, einer Nabelschnur, einer Steuerungsleitung, einer hydraulischen Leitung oder einem TEC (Tubing Encased Conductor).

6. System gemäß Anspruch 5, wobei die Übertragungsleitung umfasst ein Paar leitfähige Leitungen mit einer Isolation darauf, wobei die Isolation Lücken darin an ausgewählten Abständen entlang mindestens eines Teils der Länge der Übertragungsleitung aufweist, wobei die Lücken eine solche Größe haben und so ausgelegt sind, dass Flüssigkeit hinein fließen kann, wenn sie sich unter dem Pegel der Oberfläche der Flüssigkeit (102) befinden.

7. System gemäß irgendeinem der Ansprüche 1 bis 6, zudem umfassend mindestens einen Marker (210), positionierbar auf einer bekannten Tiefe, wobei, in Betrieb, der Detektor (122) zudem positionierbar und bedienbar ist zum Detektieren eines weiteren Teils des elektromagnetischen Pulses, der vom Marker (210) reflektiert worden ist, und der Prozessor (124) zudem ausgelegt und angeordnet ist zum Empfangen eines weiteren Signals vom Detektor (122), das den detektierten weiteren Teil des elektromagnetischen Pulses darstellt, und zum Analysieren des empfangenen Signals und des weiteren empfangenen Signals miteinander, um so den Pegel der Oberfläche der Flüssigkeit (102) zu bestimmen.

8. System gemäß irgendeinem der Ansprüche 1 bis 7, zudem umfassend eine Quelle die Reflektivität verbessernden Materials, ausgelegt und angeordnet zum Bereitstellen eines die Reflektivität verbessernden Materials an die Oberfläche der Flüssigkeit, wahlweise wobei das die Reflektivität verbessernde Material ein Material umfasst mit einer spezifischen Dichte geringer als etwa 0,7, die nicht mit Öl vermischbar ist, und das einen höheren Anteil des elektromagnetischen Pulses reflektiert, als zum Beispiel vom Öl reflektiert würde, zum Beispiel ein Material, umfassend eine Mehrzahl Glas-Mikrohohlkugeln mit einer Nickelbeschichtung.

9. System gemäß irgendeinem der Ansprüche 1, 3 bis 6 und 8, wobei

   der Pulsgenerator (120) ein Frequenzgenerator ist, positionierbar und bedienbar, so dass er mindestens zwei elektromagnetische Frequenzsignale erzeugen kann, so dass diese sich entlang des Bohrlochs zu einer Oberfläche der Flüssigkeit ausbreiten können;
   der Detektor (122) positionierbar und bedienbar, so dass er einen Teil der Signale empfangen kann, die von der Oberfläche der Flüssigkeit reflektiert worden sind und sich entlang des Bohrlochs zum Detektor (122) hin ausgebreitet haben; und
   wobei der Prozessor (124) so ausgelegt und angeordnet ist, dass er Signale vom Detektor (122) empfangen kann, die stellvertretend für die empfangenen Teile der elektromagnetischen Signale sind, und sie analysieren kann, um den Pegel der Oberfläche der Flüssigkeit (102) zu bestimmen.

10. System gemäß Anspruch 9, wobei der Detektor (122) so ausgelegt und angeordnet ist, dass er Phaseninformation der empfangenen elektromagnetischen Signale empfangen kann, und der Prozessor (124) so ausgelegt und angeordnet ist, dass er die empfangene Phaseninformation analysieren kann, um den Pegel der Oberfläche der Flüssigkeit (102) zu bestimmen.

11. Verfahren zum Messen eines Flüssigkeitspegels (102) an einem abgelegenen Ort in einem Bohrloch, umfassend

   Erzeugen eines elektromagnetischen Pulses, so dass er sich entlang des Bohrlochs zu einer Oberfläche der Flüssigkeit an einem abgelegenen Ort im Bohrloch ausbreiten kann;
   Detektieren eines Teils des elektromagnetischen Pulses, der von der Oberfläche der Flüssigkeit reflektiert worden ist und sich entlang des Bohrlochs zum Detektor (122) hin ausgebreitet hat, wobei der detektierte Teil des von der Oberfläche der Flüssigkeit reflektierten Pulses an einer Oberfläche des Bohrlochs empfangen wird; und
   Empfangen eines Signals vom Detektor (122), das den detektierten Teil des elektromagnetischen Pulses darstellt, und es Analysieren zum Bestimmen eines Pegels der Oberfläche der Flüssigkeit (102), auf der Basis einer Messung der Zeitverzögerung zwischen Erzeugung des elektromagnetischen Pulses und Detektion des detektierten Teils des elektromagnetischen Pulses, der von der Oberfläche der Flüssigkeit reflektiert worden ist.

12. Verfahren gemäß Anspruch 11, zudem ausgelegt zum Messen von zwei nicht vermischten Flüssigkeitspegeln im Bohrloch, das eine erste Bohrlochflüssigkeit und eine zweite Bohrlochflüssigkeit enthält, wobei die zweite Bohrlochflüssigkeit eine geringere Dichte als die der ersten Flüssigkeit hat und eine dielektrische Konstante, die sowohl bekannt als auch wesentlich geringer ist als die der ersten Bohrlochflüssigkeit, wobei

der Puls elektromagnetischer Energie so erzeugt wird, dass er sich entlang des Bohrlochs zur Oberfläche der Flüssigkeiten hin ausbreitet;
entsprechende von den Oberflächen der Flüssigkeiten reflektierte Teile des elektromagnetischen Pulses, und die sich entlang des Bohrlochs zum Detektor (122) hin ausgebreitet haben, detektiert werden; und
das Signal vom Detektor (122), das die detektierten Teile des elektromagnetischen Pulses darstellt, analysiert wird zum Bestimmen eines Pegels der Oberfläche jeder der beiden Flüssigkeiten.

13. Verfahren gemäß Anspruch 11, worin

mindestens zwei elektromagnetische Signale mit entsprechenden unterschiedlichen Frequenzen erzeugt werden, um sich entlang des Bohrlochs zu einer Oberfläche der Flüssigkeit zu erstrecken;
entsprechende von den Oberflächen der Flüssigkeiten reflektierte Teile des elektromagnetischen Pulses, und die sich entlang des Bohrlochs zum Detektor (122) hin ausgebreitet haben, detektiert werden; und
Signale vom Detektor (122), welche die detektierten Teile des elektromagnetischen Pulses darstellen, analysiert werden zum Bestimmen des Pegels der Oberfläche der Flüssigkeit (102).

14. Verfahren gemäß irgendeinem der Ansprüche 11 bis 13, zudem umfassend Steuern einer im Bohrloch befindlichen Pumpe (110), auf der Basis des bestimmten Pegels der Oberfläche der Flüssigkeit (102).

15. Verfahren gemäß irgendeinem der Ansprüche 11 bis 14, wobei das Analysieren zudem umfasst Analysieren des Signals zum Erhalten von Information betreffend einen Anteil von Wasser zu Kohlenwasserstoff in der Flüssigkeit auf der Basis eine Amplitude des detektierten Teils.

16. Verfahren gemäß irgendeinem der Ansprüche 11 bis 15, wobei der Puls sich entlang des Bohrlochs über eine Übertragungsleitung ausbreitet, umfassend ein Paar elektrische Leiter, die elektrisch voneinander isoliert sind, wahlweise wobei einer der Leiter mindestens einen Bohrlochteil umfasst, ausgewählt aus der Gruppe Bohrlochschalung, -rohrmaterial, einem Bohrstrang, einer Nabelschnur, einer Steuerungsleitung, einer hydraulischen Leitung oder einem TEC (Tubing Encased Conductor).

17. Verfahren gemäß Anspruch 16, worin die Übertragungsleitung ein Paar leitfähige Leitungen mit einer Isolation darauf umfasst, wobei die Isolation Lücken darin an ausgewählten Abständen entlang mindestens eines Teils der Länge der Übertragungsleitung aufweist, wobei die Lücken eine solche Größe haben und so ausgelegt sind, dass Flüssigkeit hinein fließen kann, wenn sie sich unter dem Pegel der Oberfläche der Flüssigkeit (102) befinden.

18. Verfahren gemäß irgendeinem der Ansprüche 11 bis 12 oder 14 bis 17, zudem umfassend

Positionieren mindestens eines Markers (210) auf einer bekannten Tiefe und zudem umfassend Detektieren eines weiteren Teils des elektromagnetischen Pulses, der vom Marker (210) reflektiert worden ist; und
Analysieren des empfangenen Signals und des weiteren empfangenen Signals miteinander, zum Bestimmen des Pegels der Oberfläche der Flüssigkeit (102).

19. Verfahren gemäß irgendeinem der Ansprüche 11 bis 17, zudem umfassend Bereitstellen eines die Reflektivität verbessernden Materials an der Oberfläche der Flüssigkeit, wahlweise wobei das die Reflektivität verbessernde Material ein Material umfasst mit einer spezifischen Dichte geringer als etwa 0,7, die nicht mit Öl vermischbar ist, und das einen höheren Anteil des elektromagnetischen Pulses reflektiert, als zum Beispiel vom Öl reflektiert würde, zum Beispiel ein Material, umfassend eine Mehrzahl Glas-Mikrohohlkugeln mit einer Nickelbeschichtung.

20. Verfahren gemäß Anspruch 13 oder Ansprüchen 14 bis 17 oder 19, wenn er von Anspruch 14 abhängt, worin der Detektor (122) ausgelegt und angeordnet ist zum Detektieren von Phaseninformation der detektierten Teile des elektromagnetischen Signals und der Prozessor (124) ausgelegt und angeordnet ist zum Analysieren der detektierten Phaseninformation zum Bestimmen des Pegels der Oberfläche der Flüssigkeit (102).

21. Verfahren gemäß Anspruch 11, zudem ausgelegt zum Messen der Entfernung zwischen dem Signalgenerator und dem Pegel der Flüssigkeit im Bohrloch, umfassend

Erzeugen eines ersten Frequenzsignals aus elektromagnetischer Energie, so dass es sich entlang des Bohrlochs hin zur Oberfläche der Flüssigkeit ausbreiten kann;
Detektieren eines Teils der Reflektion des ersten Frequenzsignals von der Oberfläche der Flüssigkeit, und das sich entlang des Bohrlochs hin zum Detektor (122) hin ausgebreitet hat;
Erzeugen eines zweiten Frequenzsignals aus elektromagnetischer Energie, so dass es sich entlang des Bohrlochs hin zur Oberfläche der Flüssigkeit ausbreiten kann;
Detektieren eines Teils der Reflektion des zweiten Frequenzsignals von der Oberfläche der Flüssigkeit, und das sich entlang des Bohrlochs hin zum Detektor (122) hin ausgebreitet hat;
Analysieren des ersten und des zweiten erzeugten Frequenzsignals und der ersten und der zweiten Reflektion der Frequenzsignale zum Bestimmen des Pegels der Oberfläche der Flüssigkeit (102).

22. System gemäß Anspruch 3, wobei das Bohrloch ein mit einer Schalung ausgekleidetes (108) Bohrloch ist.

23. System gemäß Anspruch 22, wobei (i) die Pumpensteuerung (126) Pumpenkapazität verringert, wenn die Entfernungsinformation anzeigt, dass der Pegel der Flüssigkeit (102) in der Nähe eines Pumpenpegels des Bohrlochs ist; und/oder (ii) die Pumpensteuerung (126) die Pumpe (110) anhält, wenn die Entfernungsinformation anzeigt, dass der Pegel der Flüssigkeit (102) an oder unter einem Pumpenpegel des Bohrlochs ist; und/oder (iii) die Pumpensteuerung (126) Pumpenkapazität erhöht, wenn die Entfernungsinformation anzeigt, dass der Pegel der Flüssigkeit (102) einen Wert, größer als eine bestimmte Menge über dem Pumpenpegel, hat.

24. System gemäß irgendeinem der Ansprüche 22 bis 23, wobei der Prozessor (124) zudem ausgelegt und angeordnet ist zum Analysieren der Signale zum Erhalten von Information in Verbindung mit einer Flüssigkeitszusammensetzung auf der Basis einer Amplitude des detektierten Teils, wahlweise wobei die Zusammensetzungsinformation einen Anteil von Wasser zu Kohlenwasserstoff umfasst.

25. System gemäß irgendeinem der Ansprüche 22 bis 24, wobei eine Änderungsgeschwindigkeit nachfolgender Entfernungsmessungsinformationen verwendet wird, um festzustellen, ob der Pegel der Flüssigkeit (102) steigt oder fällt, und die Pumpensteuerung (126) zudem den Betrieb der Pumpe (110) steuert auf der Basis von (i) der Richtung der Änderung des Pegels der Flüssigkeit (102) oder (ii) der Stärke der Änderung des Pegels der Flüssigkeit (102).

26. Verfahren gemäß Anspruch 11, ausgelegt zum Steuern einer Pumpe (110), die sich in einem Bohrloch befindet, das ein mit einer Schalung ausgekleidetes (108) Bohrloch ist, zudem umfassend

Steuern des Betriebs der Pumpe (110) auf der Basis des bestimmten Pegels der Oberfläche (102) der Flüssigkeit.

27. Verfahren gemäß Anspruch 26, worin (i) das Steuern umfasst Verringern der Pumpenkapazität, wenn die Entfernungsinformation anzeigt, dass der Pegel der Flüssigkeit (102) in der Nähe eines Pumpenpegels des Bohrlochs ist; und/oder (ii) das Steuern umfasst Anhalten der Pumpe (110), wenn die Entfernungsinformation anzeigt, dass der Pegel der Flüssigkeit (102) an oder unter einem Pumpenpegel des Bohrlochs ist; und/oder (iii) das Steuern umfasst Erhöhen der Pumpenkapazität, wenn die Entfernungsinformation anzeigt, dass der Pegel der Flüssigkeit (102) einen Wert, größer als eine bestimmte Menge über dem Pumpenpegel, hat.

28. Verfahren gemäß irgendeinem der Ansprüche 26 bis 27, zudem umfassend Bestimmen von Information betreffend eine Zusammensetzung der Flüssigkeit auf der Basis einer Amplitude des detektierten Teils, wahlweise wobei die Zusammensetzungsinformation umfasst einen Anteil von Wasser zu Koh lenwasserstoff.

29. Verfahren gemäß irgendeinem der Ansprüche 26 bis 28, wobei das Steuern zudem umfasst Steuern des Betriebs der Pumpe (110) auf der Basis von (i) der Richtung der Änderung des Pegels der Flüssigkeit (102) oder (ii) der Stärke der Änderung des Pegels der Flüssigkeit (102).

**Revendications**

1. Système pour mesurer un niveau de fluide (102) dans un endroit éloigné dans un trou de forage, comprenant :

un générateur d'impulsions (120) pouvant être positionné et opéré pour générer une impulsion d'énergie électromagnétique pour se propager le long du trou de forage vers une surface du fluide dans endroit éloigné dans le trou de forage ;

un détecteur (122) pouvant être positionné loin de la surface du fluide dans le trou de forage et opéré pour détecter une partie de l'impulsion électromagnétique réfléchie de la surface du fluide et propagée le long du trou de forage vers le détecteur (122) et captée à une surface au-dessus du trou de forage ; et

un processeur (124) configuré et arrangé pour capter un signal du détecteur (122) qui représente la partie détectée de l'impulsion électromagnétique et pour l'analyser pour déterminer un niveau de la surface du fluide (102), sur la base d'une mesure du délai de temps entre la génération de l'impulsion électromagnétique et la détection de la partie détectée de l'impulsion électromagnétique réfléchie de la surface du fluide.

2. Système selon la revendication 1, en plus adapté pour mesurer deux niveaux de fluide non mélangés dans le trou de forage contenant un premier fluide de trou de forage et un deuxième fluide de trou de forage, le deuxième fluide de trou de forage ayant une densité inférieure à celle du premier fluide de trou de forage et une constant diélectrique qui est connue et substantiellement inférieure à celle du premier fluide, où le détecteur (122) peut être positionné et opéré pour détecter des parties respectives de l'impulsion électromagnétique réfléchie des surfaces des fluides et propagées le long du trou de forage vers le détecteur (122) ; et où le processeur (124) est configuré et arrangé pour capter un signal du détecteur (122) qui représente les parties détectées de l'impulsion électromagnétique et pour l'analyser pour déterminer un niveau de la surface de chacun des deux fluides.

3. Système selon la revendication 1 ou 2, comprenant en plus un contrôleur de pompe (126) configuré et arrangé pour recevoir de l'information de distance du processeur (124) et pour utilise l'information de distance pour contrôler l'opération d'une pompe (110) qui se trouve dans le trou de forage.

4. Système selon une quelconque des revendications 1 à 3, dans lequel le processeur (124) est en plus configuré et arrangé pour analyser des signaux pour obtenir de l'information en relation avec une proportion entre eau et hydrocarbure dans le fluide à base d'une amplitude de la portion détectée.

5. Système selon une quelconque des revendications 1 à 4, dans lequel l'impulsion se propage le long du trou de forage par une ligne de transmission comprenant une paire de conducteurs électriques électriquement isolés l'un de l'autre, optionnellement dans lequel un des conducteurs comprend au moins une composante puits sélectionnée parmi le groupe constitué en coffrage de puits, tubing, un train de tiges de forage, un câble ombilical, une ligne de contrôle, une ligne hydraulique ou un TEC (conducteur enrobé en tuyaux).

6. Système selon la revendication 5, dans lequel la ligne de transmission comprend une paire de lignes conductrices ayant une isolation dessus, l'isolation ayant des lacunes dedans à des intervalles sélectionnés le long d'au moins une partie de la longueur de la ligne de transmission, les lacunes ayant une taille et étant configurées de façon à laisser du fluide entrer dedans si elles sont positionnées en-dessous du niveau de la surface du fluide (102).

7. Système selon une quelconque des revendications 1 à 6, comprenant en plus au moins un marqueur (210) pouvant être positionné à une profondeur connue, où, pendant l'utilisation, le détecteur (122) peut en plus être positionné et opéré pour détecter une partie supplémentaire de l'impulsion électromagnétique réfléchie du marqueur (210) et le processeur (124) est en plus configuré et arrangé pour capter un signal supplémentaire du détecteur (122) qui représente la partie supplémentaire détectée de l'impulsion électromagnétique, et pour analyser le signal capté et le signal supplémentaire capté en conjonction avec l'autre de façon à déterminer le niveau de la surface du fluide (102).

8. Système selon une quelconque des revendications 1 à 7, comprenant en plus une source de matériau qui améliore la réflectivité configurée et arrangée pour fournir un matériau qui améliore la réflectivité à la surface du fluide, éventuellement où le matériau qui améliore la réflectivité comprend un matériau ayant une gravité spécifique inférieure à environ 0,7, qui n'est pas miscible à l'huile, et qui réfléchit l'impulsion électromagnétique à une proportion plus élevée qu'elle ne serait réfléchie par de l'huile, par exemple, un matériau comprenant une pluralité de microsphères creuses en verre ayant un revêtement de nickel.

9. Système selon une quelconque des revendications 1, 3 à 6 et 8, dans lequel :

le générateur d'impulsions (120) est un générateur de fréquence pouvant être positionné et opéré pour produire au moins deux signaux de fréquence électromagnétique pour se propager le long du trou de forage vers une surface du fluide ;

le détecteur (122) peut être positionné et opéré pour détecter une portion des signaux électromagnétiques réfléchis de la surface du fluide et propagés le long du trou de forage vers le détecteur (122) ; et

le processeur (124) est configuré et arrangé pour capter les signaux du détecteur (122) qui représentent les parties détectées des signaux électromagnétiques et pour les analyser pour déterminer le niveau de la surface du fluide (102).

10. Système selon la revendication 9, dans lequel le détecteur (122) est configuré et arrangé pour détecter de l'information de phase des parties détectées des signaux électromagnétiques et le processeur (124) est configuré et arrangé pour analyser l'information de phase détectée pour déterminer le niveau de la surface du fluide (102).

11. Procédé pour mesurer un niveau de fluide (102) dans un endroit éloigné dans un trou de forage, comprenant :

générer une impulsion d'énergie électromagnétique pour se propager le long du trou de forage vers une surface du fluide dans endroit éloigné dans le trou de forage ;

détecter une partie de l'impulsion électromagnétique réfléchie de la surface du fluide et propagée le long du trou de forage vers le détecteur (122), où la partie de l'impulsion électromagnétique réfléchie de la surface du fluide est captée à une surface au-dessus du trou de forage ;

capter un signal du détecteur (122) qui représente la partie détectée de l'impulsion électromagnétique et l'analyser pour déterminer un niveau de la surface du fluide (102), sur la base d'une mesure du délai de temps entre la génération de l'impulsion électromagnétique et la détection de la partie détectée de l'impulsion électromagnétique réfléchie de la surface du fluide.

12. Procédé selon la revendication 11, adapté en plus pour mesurer deux niveaux de fluide non mélangés dans le trou de forage contenant un premier fluide de trou de forage et un deuxième fluide de trou de forage, le deuxième fluide de trou de forage ayant une densité inférieur à celle du premier fluide de trou de forage et une constant diélectrique qui est connue et substantiellement inférieure à celle du premier fluide, où :

l'impulsion d'énergie électromagnétique est générée pour se propager le long du trou de forage vers la surface des fluides ;

des parties respectives de l'impulsion électromagnétique réfléchie des surfaces des fluides et propagée le long du trou de forage vers le détecteur (122) sont détectées ; et

le signal du détecteur (122) qui représente les parties détectées de l'impulsion électromagnétique est analysé pour déterminer un niveau de la surface de chacun des deux fluides.

13. Procédé selon la revendication 11, dans lequel :

au moins deux signaux électromagnétique ayant des fréquences respectivement différentes sont générées pour se propager le long du trou de forage vers une surface du fluide ;

des parties respectives des signaux électromagnétiques sont réfléchies de la surface du fluide et propagées le long du trou de forage vers le détecteur (122) sont détectées; et

des signaux captés par le détecteur (122) qui représentent les parties détectées des signaux électromagnétiques sont analysées pour déterminer le niveau de la surface du fluide (102).

14. Procédé selon une quelconque des revendications 11 à 13, comprenant en plus contrôler une pompe (110) localisée dans le trou de forage à base d'un niveau déterminé de la surface du fluide (102).

15. Procédé selon une quelconque des revendications 11 à 14, dans lequel analyser comprend en plus analyser les signaux pour obtenir de l'information en relation avec une proportion entre eau et hydrocarbure dans le fluide à base d'une amplitude de la partie détectée.

16. Procédé selon une quelconque des revendications 11 à 15, dans lequel l'impulsion se propage le long du trou de forage par une ligne de transmission comprenant une paire de conducteurs électriques électriquement isolés l'un de l'autre, optionnellement dans lequel un des conducteurs comprend au moins une composante puits sélectionnée parmi le groupe constitué en coffrage de puits, tubing, un train de tiges de forage, un câble ombilical, une ligne de contrôle, une ligne hydraulique ou un TEC (conducteur enrobé en tuyaux).

17. Procédé selon la revendication 16, dans lequel la ligne de transmission comprend une paire de lignes conductrices ayant une isolation dessus, l'isolation ayant des lacunes dedans à des intervalles sélectionnés le long d'au moins une partie de la longueur de la ligne de transmission, les lacunes ayant une taille et étant configurées de façon à laisser du fluide entrer dedans si elles sont positionnées en-dessous du niveau de la surface du fluide (102).

18. Procédé selon une quelconque des revendications 11 à 12 ou 14 à 17, comprenant en plus :

   positionner au moins un marqueur (210) à une profondeur connue et détecter une partie supplémentaire de l'impulsion électromagnétique réfléchie du marqueur (210) ; et
   analyser le signal capté et le signal supplémentaire capté en conjonction avec l'autre pour déterminer le niveau de la surface du fluide (102).

19. Procédé selon une quelconque des revendications 11 à 17, comprenant en plus fournir une source de matériau qui améliore la réflectivité à la surface du fluide, éventuellement où le matériau qui améliore la réflectivité comprend un matériau ayant une gravité spécifique inférieure à environ 0,7, qui n'est pas miscible à l'huile, et qui réfléchit l'impulsion électromagnétique à une proportion plus élevée qu'elle ne serait réfléchie par de l'huile, par exemple, un matériau comprenant une pluralité de microsphères creuses en verre ayant un revêtement de nickel.

20. Procédé selon la revendication 13 ou des revendications 14 à 17 ou 19 dépendant de la revendication 14, dans lequel le détecteur (122) est configuré et arrangé pour détecter de l'information de phase des parties détectées des signaux électromagnétiques et le processeur (124) est configuré et arrangé pour analyser l'information de phase détectée pour déterminer le niveau de la surface du fluide (102).

21. Procédé selon la revendication 11, adapté en plus pour mesurer la distance entre le générateur de signal et le niveau du liquide dans le trou de forage, comprenant :

   générer un premier signal de fréquence d'énergie électromagnétique pour se propager le long du trou de forage vers la surface du fluide ;
   détecter une partie de la première réflexion du premier signal de fréquence de la surface du fluide et qui s'est propagé le long to trou de forage vers le détecteur (122) ;
   générer un deuxième signal de fréquence d'énergie électromagnétique pour se propager le long du trou de forage vers la surface du fluide ;
   détecter une partie de la deuxième réflexion du premier signal de fréquence de la surface du fluide et qui s'est propagé le long to trou de forage vers le détecteur (122) ;
   analyser les premier et deuxième signaux de fréquence et les réflexions des premier et deuxième signaux de fréquence pour déterminer le niveau de la surface de fluide (102).

22. Système selon la revendication 3, dans lequel le trou de forage est un trou de forage revêtu de coffrage (108).

23. Système selon la revendication 22, dans lequel : (i) le contrôleur de pompe (126) réduit une capacité de pompe si l'information de distance indique que le niveau de fluide (102) est près d'un niveau de pompe dans le trou de forage ; et/ou (ii) le contrôleur de pompe (126) arrête la pompe (110) si l'information de distance indique que le niveau de fluide (102) est à ou en-dessous d'un niveau de pompe dans le trou de forage ; et/ou (iii) le contrôleur de pompe (126) augmente une capacité de pompe si l'information de distance indique que le niveau de fluide (102) est à un niveau supérieur à une quantité sélectionnée au-dessus du niveau de pompe.

24. Système selon une quelconque des revendications 22 à 23, dans lequel le processeur (124) est en plus configuré et arrangé pour analyser les signaux pour obtenir de l'information en relation avec une composition de fluide à base d'une amplitude de la partie détectée, éventuellement où l'information de composition comprend une proportion entre eau et hydrocarbure.

25. Système selon une quelconque des revendications 22 à 24, dans lequel un taux de variation de mesures d'information de distances successives est utilisé pour déterminer si le niveau de fluide (102) croît ou tombe, et le contrôleur de pompe (126) contrôle en plus l'opération de la pompe (110) à base de (i) la direction de la variation du niveau de fluide (102), ou (ii) une magnitude de la variation du niveau de fluide (102).

26. Procédé selon la revendication 11, adapté pour contrôler une pompe (110) localisée dans un trou de forage qui est un trou de forage revêtu de coffrage (108), comprenant en plus :

   contrôler l'opération de la pompe (110) à base du niveau de surface (102) du fluide déterminé.

**27.** Procédé selon la revendication 26, dans lequel : (i) le contrôle comprend réduire une capacité de pompe si l'information de distance indique que le niveau de fluide (102) est près d'un niveau de pompe dans le trou de forage ; et/ou (ii) le contrôle comprend arrêter la pompe (110) si l'information de distance indique que le niveau de fluide (102) est à ou en-dessous d'un niveau de pompe dans le trou de forage ; et/ou (iii) le contrôle comprend augmenter une capacité de pompe si l'information de distance indique que le niveau de fluide (102) est à un niveau supérieur à une quantité sélectionnée au-dessus du niveau de pompe.

**28.** Procédé selon une quelconque des revendications 26 à 27, comprenant en plus déterminer de l'information en relation avec une composition du fluide à base d'une amplitude de la partie détectée, éventuellement dans lequel l'information de composition comprend une proportion entre eau et hydrocarbure.

**29.** Procédé selon une quelconque des revendications 26 à 28, dans lequel contrôler comprend en plus contrôler l'opération de la pompe (110) à base de (i) une direction de la variation du niveau de fluide (102) pendant plusieurs mesures successives, ou (ii) une magnitude de la variation du niveau de fluide (102) pendant plusieurs mesures successives.

120 — PULSE GENERATOR

RECEIVER ~122

~104

~108

PROCESSOR ~124

112

PUMP CONTROLLER ~126

102

106

110

Fig.1

Fig. 2

Fig. 3

FIG. 4

FIG. 5A

FIG. 5B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 6480000 B